# FASCICULE DE BREVET EUROPEEN

(11) **EP 3 237 889 B1**
(45) Date de publication et mention de la délivrance du brevet: **04.05.2022**
(21) Numéro de dépôt: 15823714.9
(22) Date de dépôt: 23.12.2015
(51) Int. Cl.: G01N 21/64, G01J 3/44

(54) **SPECTROFLUORIMÈTRE À LEDS POUR L'ANALYSE D'UN OBJET ET PROCÉDÉ D'ANALYSE CORRESPONDANT**
LED-SPEKTROFLUOROMETER ZUR ANALYSE EINES OBJEKTS UND ENTSPRECHENDES ANALYSEVERFAHREN
LED SPECTROFLUOROMETER FOR ANALYSIS OF AN OBJECT AND CORRESPONDING ANALYSIS METHOD

(30) Priorité: 24.12.2014 FR 1463318
(43) Date de publication de la demande: 01.11.2017
(73) Titulaire: Universite Bordeaux Montaigne, 33600 Pessac (FR); Université de Bordeaux, 33000 Bordeaux (FR); Institut Polytechnique de Bordeaux, 33400 Talence (FR); Centre National de la Recherche Scientifique, 75016 Paris (FR)
(72) Inventeur: MOUNIER, Aurélie, 33600 Pessac (FR); DANIEL, Floréal, 33000 Bordeaux (FR); LAZARE, Sylvain, 33600 Leognan (FR)
(74) Mandataire: Jacobacci Coralis Harle
(86) Numéro de dépôt international: PCT/FR2015/053744
(87) Numéro de publication internationale: WO 2016/102905

(56) Documents cités:
- WO-A1-02/46710
- FR-A1- 2 747 213
- US-A1- 2004 119 018
- F Colao ET AL: "COMPACT SCANNING LIDAR FLUOROSENSOR FOR INVESTIGATIONS OF BIODEGRADATION ON ANCIENT PAINTED SURFACES", Journal of Optoelectronics and Advanced Materials, Vol. 7, No. 6, 1 décembre 2005 (2005-12-01), pages 3197-3208, XP055003278, Extrait de l'Internet: URL:http://joam.inoe.ro/arhiva/pdf7_6/Cola o.pdf [extrait le 2011-07-20]
- ANGLOS D ET AL: "LASER-INDUCED FLUORESCENCE IN ARTWORK DIAGNOSTICS: AN APPLICATION IN PIGMENT ANALYSIS", APPLIED SPECTROSCOPY, THE SOCIETY FOR APPLIED SPECTROSCOPY. BALTIMORE, US, vol. 50, no. 10, 1 octobre 1996 (1996-10-01), pages 1331-1334, XP008023476, ISSN: 0003-7028, DOI: 10.1366/0003702963904863
- MIYOSHI T ET AL: "LASER-INDUCED FLUORESCENCE OF OIL COLOURS AND ITS APPLICATION TO THE IDENTIFICATION OF PIGMENTS IN OIL PAINTINGS", JAPANESE JOURNAL OF APPLIED PHYSICS, JAPAN SOCIETY OF APPLIED PHYSICS, JP, vol. 21, no. 7, 1 juillet 1982 (1982-07-01), pages 1032-1036, XP001150090, ISSN: 0021-4922, DOI: 10.1143/JJAP.21.1032
- AURÃ LIE MOUNIER ET AL: "Spectrofluorimetric study of the ageing of mixtions used in the gildings of mediaeval wall paintings", ENVIRONMENTAL SCIENCE AND POLLUTION RESEARCH - INTERNATIONAL, SPRINGER BERLIN / HEIDELBERG, LA, vol. 18, no. 5, 15 December 2010 (2010-12-15), pages 772-782, XP019900959, ISSN: 1614-7499, DOI: 10.1007/S11356-010-0429-5

## Description

La présente invention concerne de manière générale le domaine de la métrologie optique appliquée aux oeuvres d'art et aux objets archéologiques.

Elle concerne plus particulièrement un spectrofluorimètre pour l'analyse d'un objet comportant des moyens d'excitation lumineuse adaptés à illuminer une zone d'étude dudit objet avec un faisceau lumineux d'excitation, et des moyens optiques d'acheminement adaptés à collecter un flux lumineux de fluorescence émis par ladite zone d'étude excitée par le faisceau lumineux d'excitation et à acheminer ledit flux lumineux de fluorescence vers un spectromètre optique pour l'analyse du spectre lumineux dudit flux.

La spectrofluorimétrie est une méthode d'analyse optique qui permet notamment de caractériser les matériaux présents à la surface d'un objet que l'on souhaite analyser, et également de suivre la dégradation de ces matériaux au cours du temps.

WO 02/46710 A1 présente un spectrofluorimètre pour l'analyse de peintures ou de monuments.

Les appareils portables disponibles sur le marché, par exemple les spectrofluorimètres commercialisés par les sociétés Ocean Optics, Avantès, ou SteelarNet, permettent de travailler sur des objets de petite taille ou déposés sur des lames de microscope.

Ces appareils ne permettent donc pas l'étude des oeuvres d'art fragiles, pour lesquelles le prélèvement d'échantillon sur l'objet ou le déplacement de l'objet vers un laboratoire d'analyse n'est pas possible.

De plus, les spectrofluorimètres connus sont souvent volumineux, lourds, peu compacts et nécessitent parfois un contact entre l'objet à analyser et les moyens d'excitation lumineuse, ce qui peut s'avérer préjudiciable pour l'objet.

Afin de remédier aux inconvénients précités de l'état de la technique, la présente invention propose un spectrofluorimètre particulièrement compact, facilement transportable, et adapté à l'étude des oeuvres d'art et des objets archéologiques.

Plus particulièrement, on propose selon l'invention définie dans la revendication 1 un spectrofluorimètre tel que défini en introduction, dans lequel les moyens d'excitation lumineuse comprennent une première diode électroluminescente et une deuxième diode électroluminescente, ledit faisceau lumineux d'excitation étant formé de l'un et/ou de l'autre faisceau lumineux généré par chaque diode électroluminescente.

Ainsi, grâce à l'utilisation de diodes électroluminescentes qui sont des sources lumineuses de taille réduite, les moyens d'excitation lumineuse présentent un encombrement et un poids réduit de sorte que le spectrofluorimètre selon l'invention est compact et transportable.

Les diodes électroluminescentes peuvent comprendre également leur propre système optique de focalisation directement intégré de sorte qu'aucun élément optique additionnel n'est nécessaire pour focaliser le faisceau d'excitation lumineuse sur la surface de l'l'objet.

De plus, les diodes électroluminescentes sont des sources alimentées en basse tension et peuvent fonctionner soit sur piles, soit sur batterie, soit *via* le port USB (Universal Serial Bus) d'un appareil électronique portable, ce qui rend le spectrofluorimètre utilisable sans source d'alimentation extérieure pour les moyens d'excitation lumineuse.

Enfin, les diodes électroluminescentes sont des composants peu coûteux, de sorte que le spectrofluorimètre selon l'invention présente un coût de revient faible.

De manière avantageuse, la première diode électroluminescente du spectrofluorimètre selon l'invention émet à une première longueur d'onde comprise entre 250 et 300 nm, cette première longueur d'onde étant particulièrement adaptée à l'étude des matériaux organiques présents dans les oeuvres d'art ou les objets d'archéologie.

De plus, selon l'invention: la première diode électroluminescente est du type à lentille intégrée, le spectrofluorimètre comporte un système de déplacement des moyens d'excitation lumineuse adaptés à ajuster la position de ladite zone d'étude sur l'objet et/ou l'orientation dudit faisceau lumineux d'excitation par rapport à l'objet, le spectrofluorimètre comporte un système de positionnement mécanique en translation et/ou en rotation des moyens optiques d'acheminement pour maximiser le flux lumineux de fluorescence collecté, le système de déplacement et le système de positionnement mécanique sont intégrés dans une tête de mesure, et le spectrofluorimètre comprend des moyens de commande pour piloter ladite tête de mesure.

De manière avantageuse également, la deuxième diode électroluminescente émet à une deuxième longueur d'onde comprise entre 300 et 500 nm.

D'autres caractéristiques non limitatives et avantageuses du spectrofluorimètre conforme à l'invention sont les suivantes :
- lesdits moyens d'excitation lumineuse comprennent une première lentille de focalisation pour focaliser ledit faisceau lumineux d'excitation sur une surface dudit objet ;
- lesdits moyens optiques d'acheminement comprennent une deuxième lentille de focalisation pour acheminer le flux lumineux de fluorescence collecté vers une entrée dudit spectromètre optique ;
- lesdits moyens optiques d'acheminement comprennent un premier et un deuxième filtre optique destinés à éliminer des parties dudit flux lumineux de fluorescence qui sont émises respectivement à la première longueur d'onde et à la deuxième longueur d'onde ;

- le premier et le deuxième filtre optique sont des filtres passe-haut présentant respectivement une première fréquence de coupure égale à 320 nm et une deuxième fréquence de coupure égale à 455 nm ;
- les moyens optiques d'acheminement comportent une fibre optique pour acheminer ledit flux lumineux de fluorescence collecté vers ledit spectromètre optique ;
- il est prévu des moyens de multiplexage temporel des faisceaux lumineux générés par chacune des deux diodes électroluminescentes et dans lequel ledit spectromètre optique est adapté à traiter un flux lumineux de fluorescence multiplexé.

L'invention trouve des applications dans les domaines de l'art pour l'identification des pigments et des liants, de la conservation pour l'étude des altérations des matériaux mais aussi de la physico-chimie des surfaces et des interfaces, des poudres, des textiles, des fibres, des échantillons finement divisés ou granuleux, des minéraux (pierres en surface), des végétaux, des tissus biologiques et même des liquides en surface ou en profondeur sous quelques millimètres de profondeur.

Le principal domaine envisagé pour l'invention est celui de l'art pour la caractérisation et l'étude des pigments et des liants employés dans les peintures mais aussi pour la conservation des oeuvres par l'étude de l'altération des matériaux.

Ainsi, de manière particulièrement avantageuse, le spectromètre optique du spectrofluorimètre conforme à l'invention délivre un signal de fluorescence représentatif du spectre lumineux dudit flux lumineux de fluorescence, et ledit spectrofluorimètre comporte des moyens informatiques adaptés à traiter ledit signal de fluorescence pour identifier au moins un composé chimique présent dans ladite zone d'étude de l'objet analysé.

De préférence, lesdits moyens informatiques comportent un registre de base de données comprenant une pluralité de spectres lumineux de référence associés chacun à un composé chimique particulier, ladite identification d'au moins un composé chimique par lesdits moyens informatiques étant réalisée par comparaison du spectre lumineux dudit flux lumineux de fluorescence avec au moins un autre spectre lumineux de référence.

L'un des avantages de ce spectrofluorimètre réside dans son utilisation pour l'étude des composés chimiques, tels que les pigments par exemple.

Son couplage à un registre de base de données permet d'identifier rapidement sur le spectre lumineux obtenu la nature du ou des pigments qui sont présents dans la zone d'étude de l'objet illuminé par le flux lumineux d'excitation.

Le spectrofluorimètre selon l'invention peut également permettre dans certains modes de réalisation l'acquisition de spectres de réflexion en plus des spectres de fluorescence.

L'invention concerne enfin un procédé d'identification d'un composé chimique présent dans la zone d'étude d'un objet à analyser au moyen d'un spectrofluorimètre conforme à l'invention, comportant des étapes consistant à :
a) illuminer ladite zone d'étude de l'objet au moyen dudit flux lumineux d'excitation ;
b) collecter et acheminer grâce auxdits moyens optiques d'acheminement ledit flux lumineux de fluorescence émis par ladite zone d'étude excitée vers ledit spectromètre optique pour l'analyse du spectre lumineux dudit flux ;
c) traiter grâce auxdits moyens informatiques ledit signal de fluorescence représentatif du spectre lumineux dudit flux lumineux de fluorescence; et
d) identifier à partir du traitement de l'étape c) au moins un composé chimique présent dans ladite zone d'étude de l'objet analysé.

Avantageusement, lorsque le spectrofluorimètre comporte des moyens informatiques comprenant un registre de base de données, l'identification dudit composé chimique de l'étape d) est réalisée en comparant ledit spectre lumineux dudit flux lumineux de fluorescence avec au moins un autre spectre lumineux de référence dudit registre de base de données des moyens informatiques du spectrofluorimètre.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un spectrofluorimètre selon l'invention avec deux diodes électroluminescentes ;
- la figure 2 est un schéma de principe expliquant le fonctionnement des lentilles de focalisation pour l'excitation et la collection ;
- la figure 3 est une vue de côté de la figure 2 lorsque l'une des diodes électroluminescentes intègre une lentille interne de focalisation ;
- les figures 4 à 6 sont des courbes représentant le signal de fluorescence en fonction de la longueur d'onde obtenue grâce au spectrofluorimètre de la figure 1 respectivement pour trois pigments bleus, jaunes et rouges, et
- la figure 7 est un schéma de principe d'une variante de réalisation d'un spectrofluorimètre selon l'invention.

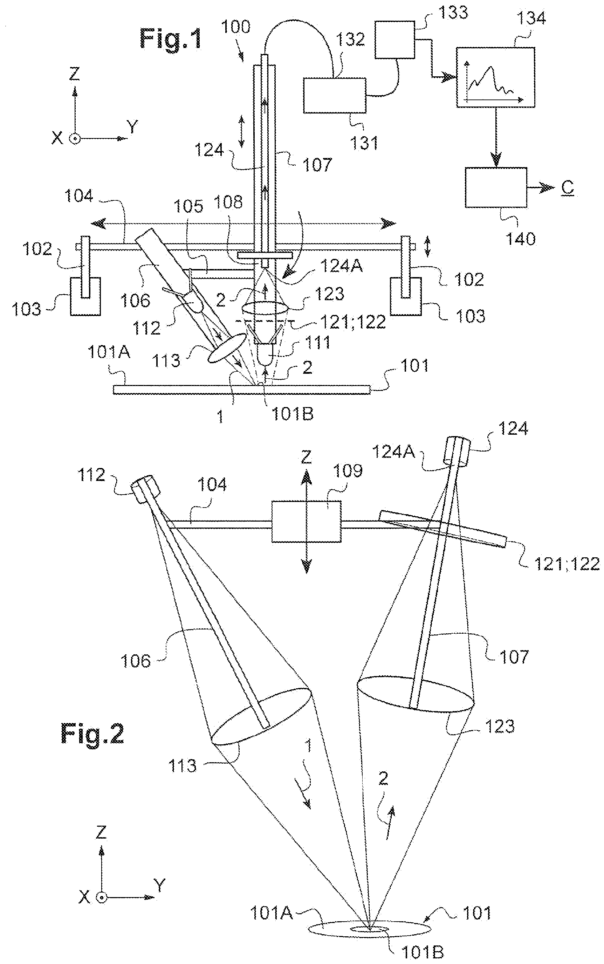

Sur la figure 1, on a représenté un spectrofluorimètre 100 selon un mode de réalisation particulier de l'invention.

Ce spectrofluorimètre 100 est destiné à l'analyse d'un objet 101, ici sensiblement plan, sur une surface 101A supérieure duquel une couche de matériaux est présente.

Le spectrofluorimètre 100 fonctionne de la façon suivante. Un faisceau lumineux d'excitation 1 est dirigé vers la surface 101A de l'objet 101, sur une zone d'étude 101B de l'objet 101 que l'on souhaite analyser.

Ce faisceau lumineux d'excitation 1 va être absorbé par les différents constituants de la couche de matériaux, qui à leur tour vont émettre un flux lumineux de fluorescence 2.

Le flux lumineux de fluorescence 2 est collecté et envoyé vers un spectromètre optique 131 relié à un moyen de traitement 133, par exemple un ordinateur, qui délivre un signal représentatif du spectre lumineux 134 du flux lumineux de fluorescence 2.

L'analyse de ce spectre lumineux 134 permet d'identifier le ou les constituants de la couche de matériaux présents à la surface 101A de l'objet 101.

En déplaçant la zone d'étude 101B sur cette surface 101 A, on remonte ainsi à une information sur la distribution des constituants dans l'objet 101.

On va maintenant décrire plus en détail les différents éléments du spectrofluorimètre 100 de la figure 1.

Afin de produire le faisceau lumineux d'excitation 1, le spectrofluorimètre 100 comporte tout d'abord des moyens d'excitation lumineuse adaptés à illuminer la zone d'étude 101B de l'objet 101 avec le faisceau lumineux d'excitation 1.

Selon une caractéristique avantageuse de l'invention, ces moyens d'excitation lumineuse comprennent deux diodes électroluminescentes : une première diode électroluminescente 111 et une deuxième diode électroluminescente 112.

La première diode électroluminescente 111 est une diode ultraviolette (ou « *diode UV »)* qui émet à une première longueur d'onde, notée λ1, comprise entre 250 et 300 nanomètres (nm). Ici, cette première longueur d'onde λ1 est égale à 285 nm. Cette première diode électroluminescente 111 est particulièrement adaptée à l'étude de la fluorescence des liants organiques comme la gomme arabique ou les colles protéiniques, ou par exemple celle de pigments bleus comme le lapis-lazuli, l'azurite ou le « bleu égyptien ».

La deuxième diode électroluminescente 112 est de préférence une diode émettant dans une gamme de longueur d'onde comprise entre 300 et 500 nm. Ici, cette deuxième diode électroluminescente 112 émet à une deuxième longueur d'onde, notée λ2, qui est égale à 375 nm.

Cette deuxième diode électroluminescente 112 est adaptée à l'étude de la fluorescence des liants lipidiques comme le jaune d'oeuf ou l'huile de lin, ou encore des pigments jaunes (orpiment, jaune de plomb et d'étain, ...) ou rouges (minium, cinabre, cochenille, ...).

La première diode électroluminescente 111 présente de préférence une puissance lumineuse moyenne inférieure à 100milliwatts (mW), encore plus préférentiellement inférieure à 10 mW. Cette puissance lumineuse est ici de 0,5 mW.

De la même manière, la deuxième diode électroluminescente 112 présente de préférence une puissance lumineuse moyenne inférieure à 100milliwatts (mW), encore plus préférentiellement inférieure à 10 mW. Cette puissance lumineuse est ici égale à environ 5 mW et est répartie dans un cône d'émission d'angle au sommet égal à 10°.

La faible puissance des diodes électroluminescentes permet de ne pas endommager la surface de l'objet avec un faisceau lumineux d'excitation de trop forte puissance, ce qui est critique lors de l'étude d'oeuvres fragiles.

Avantageusement, les puissances des diodes électroluminescentes sont adaptées pour, d'une part, que le flux lumineux de fluorescence 2 soit d'un niveau suffisant pour être détectée correctement par le spectromètre optique 131, par exemple avec un bon rapport signal à bruit ; et, d'autre part, que la charge thermique, *i.e.* la chaleur, déposée sur la zone d'étude 101B ne dépasse pas un seuil prédéterminé d'endommagement, par exemple un seuil de fusion dans le cas d'une peinture.

De manière préférée, la première diode électroluminescente 111 et la deuxième diode électroluminescente 112 fonctionnent sur pile ou bien sur batterie. Ceci permet de s'affranchir de l'utilisation d'un dispositif d'alimentation additionnel ce qui alourdirait et complexifierait le spectrofluorimètre.

En variante, les diodes électroluminescentes peuvent être alimentées *via* le port USB d'un appareil électronique portable fonctionnant sur batterie, par exemple un ordinateur du type portable, une tablette, ou bien un téléphone mobile.

Dans un autre mode de réalisation, le spectrofluorimètre pourrait comporter plus de deux diodes électroluminescentes en fonction du type d'objet à analyser. Par exemple, on pourrait prévoir l'utilisation d'une troisième diode électroluminescente émettant dans une gamme de longueurs d'onde comprise entre 440 nm et 500 nm, pour l'étude de la fluorescence des pigments jaunes organiques.

De préférence, le spectrofluorimètre peut prévoir l'utilisation de 2 à 30 diodes électroluminescentes, pouvant inclure notamment des diodes électroluminescentes émettant dans l'infrarouge et/ou dans l'ultraviolet.

Pour gagner en compacité lors de la mise en œuvre du spectrofluorimètre avec plusieurs diodes électroluminescentes, on peut prévoir de remplacer une diode électroluminescente par une autre en la positionnant à la même place, par exemple au moyen d'un système mécanique et/ou électrique de positionnement du type roue, barillet, ou platine de translation, actionné manuellement ou avec un servomoteur commandé par logiciel.

Comme le montre la figure 1, la première diode électroluminescente 111 est montée sur un premier bras 108 du spectrofluorimètre 100, auquel est également relié un deuxième bras 106 grâce à un pont 105 rendant les deux bras 106, 108 solidaires entre eux.

Le deuxième bras 106, qui porte la deuxième diode électroluminescente 112, est orienté de sorte que le faisceau lumineux généré par celle-ci est incliné par rapport à la surface 101A de l'objet 101.

Le spectrofluorimètre 100 comporte par ailleurs un système de déplacement des moyens d'excitation lumineuse.

Plus particulièrement ici, il est prévu deux poteaux 102 verticaux d'axe Z (voir figure 1) reliés entre eux au moyen d'une barre transversale 104 horizontale d'axe Y et deux bases 103 dans lesquelles les deux poteaux 102 sont montés mobiles en translation selon l'axe Z de sorte que la distance de la barre transversale 104 à la surface 101A de l'objet 101 varie.

Il est également prévu une potence, horizontale selon l'axe X, et un élément de raccordement (non visibles sur la figure 1) de cette potence sur la barre transversale 104 qui est adapté à coulisser le long de celle-ci pour une translation de la potence dans une direction parallèle à l'axe Y.

Sur cette potence est par ailleurs fixé le premier bras 108 du spectrofluorimètre 100 de sorte que grâce au système de déplacement comprenant ici les poteaux 102, les bases 103, la barre transversale 104, la potence et l'élément de raccordement, le premier bras 108 et le deuxième bras 106 du spectrofluorimètre 100 sont mobiles par rapport à l'objet 101.

De cette façon, il est alors possible d'ajuster la position de la zone d'étude 101B sur l'objet 101.

En variante, on pourrait également prévoir d'autres moyens de déplacement pour ajuster l'orientation du faisceau lumineux d'excitation par rapport à l'objet et d'autres supports (pied photo, perche...).

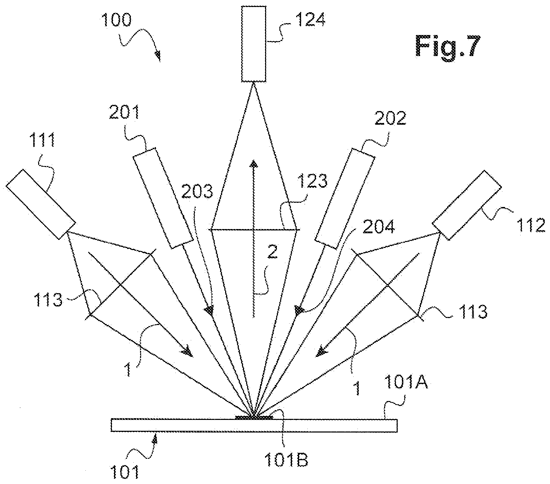

Dans un mode de réalisation particulier représenté sur la figure 7, on peut prévoir d'équiper le spectrofluorimètre 100 d'un témoin de positionnement comportant deux lasers 201, 202 émettant respectivement deux faisceaux lasers 203, 204 visibles se croisant à la surface 101A de l'échantillon 101, au niveau de la zone d'étude 101B, quand le spectrofluorimètre 100 est à une distance optimale de sa surface 101A.

En variante encore, il est également possible d'inclure un système optique de positionnement comprenant par exemple une caméra ou un microscope, ce système optique de positionnement permettant un positionnement latéral, c'est-à-dire dans le plan de la surface de l'échantillon, du spot d'analyse sur l'échantillon.

Ce système optique de positionnement est destiné à viser à distance la surface de l'échantillon, avec un grossissement ou sans grossissement, sans ou avec des moyens auxiliaires d'éclairage distincts des diodes électroluminescentes.

Dans un autre mode de réalisation, le spectrofluorimètre comporte un pied, du type pied-photo ou trépied, et une barre de translation sur laquelle est positionnée une platine d'approche millimétrique en X, Y et Z.

Bien que non représenté sur la figure 1, il est ici prévu un interrupteur permettant d'allumer alternativement la première diode électroluminescente 111 et la deuxième diode électroluminescente 112.

Dans cette configuration, le faisceau lumineux d'excitation 1 est alors formé soit par le faisceau lumineux généré par la première diode électroluminescente 111, soit par le faisceau lumineux généré par la deuxième diode électroluminescente 112.

En variante, le spectrofluorimètre peut inclure un programme permettant de lancer l'allumage successif des diodes par un seul clic.

Dans un autre mode de réalisation non représenté, l'interrupteur peut être remplacé par des moyens de multiplexage temporel des faisceaux lumineux générés par chacune des deux diodes électroluminescentes. Ces moyens de multiplexage temporel peuvent par exemple comprendre des moyens optiques adaptés pour pulser au moins une diode et moduler le flux lumineux émis par celle-ci. Dans ce cas, le flux lumineux de fluorescence 2 est lui-même multiplexé de sorte qu'il est nécessaire d'utiliser un spectromètre optique 131 adapté pour traiter un flux lumineux multiplexé.

Dans un autre mode de réalisation, l'interrupteur est remplacé par des moyens de commande impulsionnels permettant d'allumer, ensemble ou successivement, les diodes électroluminescentes de manière impulsionnelle, c'est-à-dire avec des durées d'émission courtes. De tels moyens de commande impulsionnels peuvent comprendre par exemple des alimentations en courant pulsées. Ce schéma de commande des diodes électroluminescentes offre un intérêt soit pour éliminer le bruit de mesure, soit pour mesurer les durées de vie de fluorescence.

Ces dispositifs optiques, électriques ou électroniques utilisés pour multiplexer ou pulser les flux lumineux émis peuvent être programmables. Ceci permet en particulier de réaliser des analyses sur différents objets dans des conditions expérimentales souhaitées et suivant un protocole adapté à l'étude de ces objets.

En particulier, l'irradiation pulsée permet de prévenir les dommages thermiques qui pourraient être causés à la zone d'étude 101B de l'objet 101 sondé par le faisceau lumineux d'excitation 1.

Comme représenté sur la figure 1, les moyens d'excitation lumineuse comprennent une première lentille de focalisation 113 disposé dans le deuxième bras 106 du spectrofluorimètre 100 en aval de la deuxième diode électroluminescente 112.

Cette première lentille de focalisation 113 est destinée à focaliser le faisceau lumineux d'excitation 1 sur la surface 101A de l'objet 101. Son ouverture et sa focale sont déterminées pour, d'une part, collecter la majeure partie du flux lumineux rayonné par la deuxième diode électroluminescente 112, et, d'autre part, focaliser le faisceau lumineux d'excitation 1 sur une zone d'étude 101B dont la taille est de l'ordre de 1 mm de diamètre (voir figure 2).

La première diode électroluminescente 111 est, quant à elle, du type à lentille intégrée de sorte qu'une lentille de focalisation additionnelle n'est pas nécessaire pour obtenir une bonne focalisation sur l'objet 101.

On va maintenant décrire en référence aux figures 1 et 2, les moyens optiques d'acheminement qui collectent le flux lumineux de fluorescence 2 émis par la zone d'étude 101B excitée par le faisceau lumineux d'excitation 1 pour acheminer ce flux lumineux de fluorescence 2 vers le spectromètre optique 131 en vue de l'analyse de son spectre lumineux.

Ces moyens optiques d'acheminement comprennent ici une fibre optique 124 dans laquelle est transporté le flux lumineux de fluorescence 2 jusque vers une entrée 132 du spectromètre optique 131.

Cette fibre optique 124 est ici une fibre optique de 400 micromètres de diamètre. Elle présente une entrée de fibre 124 au travers de laquelle le flux lumineux de fluorescence 2 est injecté.

Néanmoins, étant donné que l'ouverture numérique à l'entrée d'une telle fibre optique 124 est généralement faible, le flux lumineux de fluorescence 2 doit être focalisé sur l'entrée de fibre 124A.

Ainsi, comme cela est représenté de manière schématique sur la figure 2, les moyens optiques d'acheminement comprennent une deuxième lentille de focalisation 123, en amont de la fibre optique 124 pour focaliser le flux lumineux de fluorescence 2 collecté sur l'entrée de fibre 124.

Comme pour la première lentille de focalisation 113, l'ouverture (i.e. le diamètre) et la focale de cette deuxième lentille de focalisation 123 sont déterminées pour, d'une part, collecter la plus grande partie du flux lumineux de fluorescence 2 émis par la zone d'étude 101B excitée par le faisceau lumineux d'excitation 1, et, d'autre part, focaliser le faisceau lumineux de fluorescence 2 sur l'entrée de fibre 124A de la fibre optique 124.

Le positionnement des différents éléments optiques du spectrofluorimètre 100 est relativement critique pour la sensibilité de la mesure, si bien que le positionnement de la fibre optique 124 et de la deuxième lentille de focalisation 123 à la fois l'une par rapport à l'autre et à la fois par rapport à la zone d'étude 101B de l'objet 101 doit être réalisé avec précision.

Aussi, comme représenté sur la figure 1, le spectrofluorimètre 100 selon l'invention comporte un système de positionnement mécanique en translation et/ou en rotation des moyens optiques d'acheminement pour maximiser le flux lumineux de fluorescence 2 collecté par les moyens optiques d'acheminement et transmis au spectromètre optique 131, ici *via* la fibre optique 124.

Ce système de positionnement mécanique comprend ici, outre les poteaux 102, les bases 103 et la barre transversale 104 du système de déplacement des moyens d'excitation lumineuse, un support 107 monté sur la barre transversale 104 et une platine de translation 3 axes (109, voir figure 2) avec un réglage fin disposé entre la barre transversale 104 et le support 107 de manière à pouvoir régler la position de l'entrée de fibre 124A par rapport à la deuxième lentille de focalisation 123 et obtenir ainsi un signal de fluorescence maximal.

Ce système de positionnement est relié à un support de table, qui peut être un portique coulissant, un bras articulé, robotisé ou à déplacement manuel.

Les deux rails 106, 108 et le pont 105 définissent enter eux un triangle plan tel que son sommet inférieur se trouve sur la surface 101A supérieure de l'objet 101 grâce au réglage en Z de la platine 109.

Ce réglage nécessaire pour obtenir une bonne mesure peut être effectué à la main, par une molette de la platine 109, ou automatiquement dans le cas d'un système motorisé.

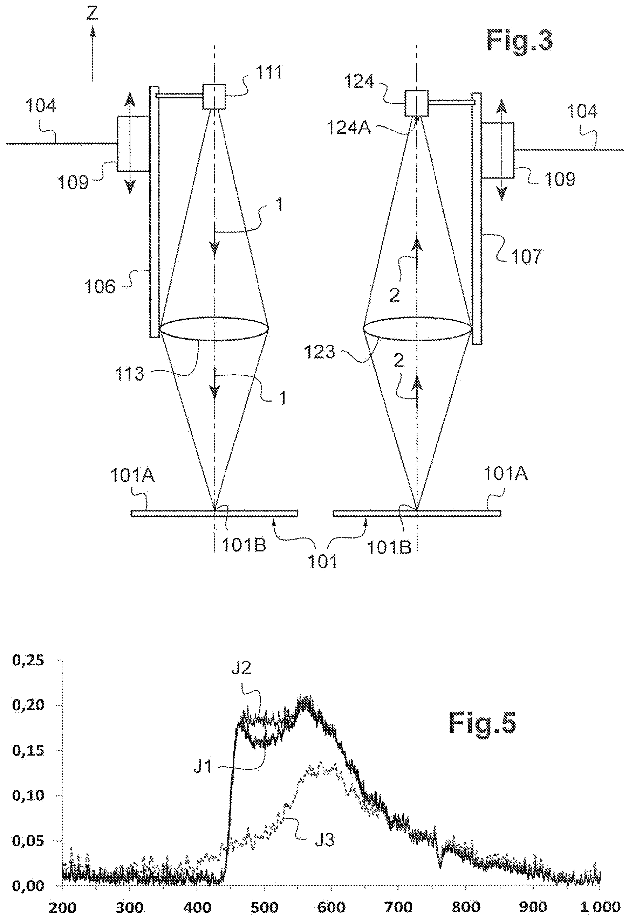

Dans le cas où la première diode électroluminescente 111 intègre une lentille interne de focalisation (cas de la figure 3, vue de côté), le dispositif est similaire mais avec des distances diode-lentille et lentille-objet plus courtes.

Selon l'invention, le système de déplacement et le système de positionnement mécanique sont intégrés dans une tête de mesure, qui est pilotée, par exemple de manière automatisée, par des moyens de commande.

De manière avantageuse, et comme représenté sur les figures 1 et 2 (où seul un filtre est représenté), les moyens optiques d'acheminement comprennent également deux filtres optiques: un premier filtre optique 121 associé à la première diode électroluminescente 111 et un deuxième filtre optique 122 associé à la deuxième diode électroluminescente 112.

De façon plus générale, les moyens optiques d'acheminement peuvent comprendre un nombre de filtres optiques inférieur ou égal au nombre de diodes électroluminescentes.

Ces filtres optiques 121, 122 ont pour fonction d'éliminer une partie du flux lumineux de fluorescence 2 qui est émise respectivement à la première longueur d'onde λ1 et à la deuxième longueur d'onde λ2.

En effet, le faisceau lumineux d'excitation 1 est partiellement absorbé dans la zone d'étude 101B de l'objet 101 et une partie non négligeable de ce faisceau est réfléchie par la surface 101A supérieure de cet objet 101 de sorte qu'un faisceau lumineux réfléchi, à la première ou à la deuxième longueur d'onde en fonction de la diode électroluminescente 111, 112 qui est allumée, se superpose au faisceau lumineux de fluorescence 2.

Sans précaution particulière, ce faisceau lumineux réfléchi est transporté jusqu'au spectromètre optique 131 si bien que le signal de fluorescence est faussé.

Les filtres optiques 121, 122 utilisés sont donc destinés à rejeter le flux lumineux aux première et deuxième longueurs d'onde λ1, λ2 parvenant à l'entrée de fibre 124A de manière à ce que le spectre lumineux mesuré par le spectromètre optique 131 ne soit pas pollué par ce flux parasite.

De manière générale, tout filtre optique permettant de filtrer une longueur d'onde ou une bande de longueur d'onde sensiblement centrée sur l'une des deux longueurs d'onde en question peut convenir.

Dans le mode de réalisation décrit ici, le premier filtre optique 121 et le deuxième filtre optique 122 sont des filtres passe-haut présentant respectivement une première fréquence de coupure, notée fc1, égale à 320 nm et une deuxième fréquence de coupure, notée fc2, égale à 455 nm.

Ces deux filtres optiques 121, 122 permettent à la fois d'éliminer la réflexion parasite à la longueur d'onde de la diode électroluminescente et à la fois de ne pas couper spectralement de manière trop importante le flux lumineux de fluorescence 2 dans les longueurs d'onde d'intérêt.

En variante, les deux filtres optiques pourraient être des filtres passe-bande par exemple centrés autour des longueurs d'onde de 285 nm et 375 nm et présentant une largeur spectrale de 10 à 20 nm.

En variante encore, le premier filtre optique est un filtre passe-haut présentant une première fréquence de coupure, égale à 320 nm à 320 nm et le deuxième filtre optique est un filtre passe-haut présentant une deuxième fréquence de coupure qui est fonction de la deuxième longueur d'onde λ2.

Le spectrofluorimètre décrit ci-dessus répond aux exigences de l'application visant à détecter et mesurer la spectrofluorescence sur des oeuvres d'art qui requièrent une mesure sans contact et un temps d'exposition le plus court possible. La durée de mesure pour le spectrofluorimètre de l'invention est généralement comprise entre 1 et 50 secondes.

Grâce aux systèmes de déplacement et de positionnement, le positionnement se fait en quelques secondes, typiquement en moins de 10 s, et la mesure est acquise en quelques secondes après l'allumage des diodes électroluminescentes.

Comme les diodes électroluminescentes 111, 112 sont pré-positionnées dans les bras 106, 108, le passage d'une longueur d'onde à l'autre est instantané par une simple action de l'interrupteur.

Grâce à la deuxième lentille de focalisation 123, le maximum de lumière de fluorescence, qui peut être filtrée ou non, se présente à l'entrée de fibre 124A pour être redirigée vers l'entrée 132 du spectromètre optique 131.

Le spectrofluorimètre 100 selon l'invention est bien adapté à une mesure sensible nécessaire pour préserver au maximum les oeuvres d'art fragiles et précieuses, comme par exemple les enluminures médiévales.

Dans un mode de réalisation particulier, on peut par ailleurs prévoir d'utiliser des filtres de densité destinés à atténuer la quantité de lumière ultra-violette reçue par un échantillon particulièrement fragile. On peut par exemple utiliser :
- un densité de 0,1 qui permet une baisse des UV reçus de 25%,
- une densité de 0,3 pour une baisse de 50%, et
- une densité de 0,6 pour une baisse de 75%.

Ces filtres de densité optique peuvent également être au moins en partie aimantés, par exemple à leur périphérie s'il s'agit de filtre présentant une forme de disque, de sorte qu'ils peuvent se superposer afin d'atténuer davantage la lumière ultra-violette reçue par la surface de l'échantillon.

Ce spectrofluorimètre est portable, léger et présente un coût réduit.

De manière avantageuse, le spectrofluorimètre 100 comporte des moyens informatiques 140 qui traitent un signal représentatif du spectre lumineux du flux lumineux de fluorescence 2 délivré par le spectromètre optique 131 (voir figure 1).

Le traitement de ce signal représentatif par les moyens informatiques 140 permet d'identifier au moins un composé chimique C susceptible d'être présent dans la zone d'étude 101B de l'objet 101 qui est en cours d'analyse.

Préférentiellement, les moyens informatiques 140 comportent un registre de base de données (non représenté) comprenant une pluralité de spectres lumineux de référence, chaque spectre lumineux de référence étant associé à un composé chimique particulier dont le spectre de fluorescence dans la gamme de longueurs d'onde intéressante est connu avec précision.

Grâce à ce registre de base de données, l'identification d'un composé chimique C par les moyens informatiques 140 est alors réalisée en comparant le spectre lumineux du flux lumineux de fluorescence 2 avec au moins un autre spectre lumineux de référence, préférentiellement avec une pluralité de spectres lumineux de référence, voire avec la totalité des spectres enregistrés dans le registre de base de données.

### EXEMPLES

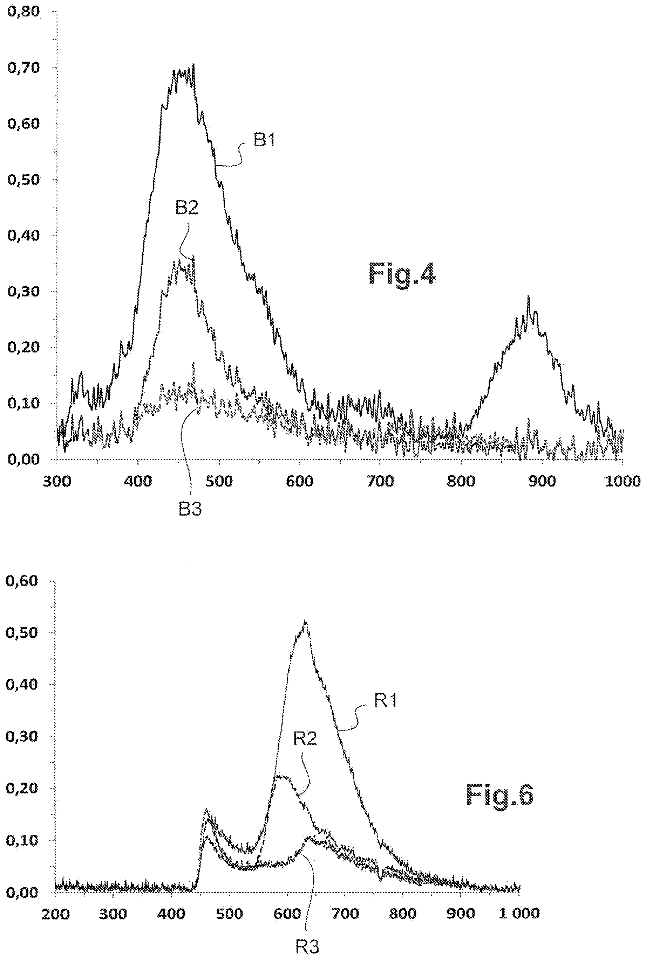

On va maintenant décrire en référence aux figures 4 à 6 un procédé d'identification d'un composé chimique au moyen du spectrofluorimètre 100 précédemment décrit.

Dans une première étape du procédé d'identification selon l'invention, la zone d'étude 101B de l'objet 101 est illuminée au moyen du flux lumineux d'excitation 1. C'est dans cette zone d'étude 101B de l'objet 101 à analyser que l'on recherche la présence du composé chimique.

Ainsi illuminée par les moyens d'excitation lumineuse 111, 112, 113, la zone d'étude 101B émet le flux lumineux de fluorescence 2, ce flux lumineux de fluorescence 2 étant fonction notamment de la nature des composés chimiques qui sont excités par le flux lumineux d'excitation et qui fluorescent en réponse à cette excitation.

Dans une seconde étape, ce flux lumineux de fluorescence 2 est alors collecté et acheminé grâce aux moyens optiques d'acheminement 121, 122, 123, 124 vers le spectromètre optique 131 pour son analyse.

Comme représenté sur la figure 1, le spectromètre optique 131 délivre alors un signal de fluorescence 134 qui est représentatif du spectre lumineux du flux lumineux de fluorescence 2.

On a représenté sur les figures 3 à 5 différentes courbes représentant le signal de fluorescence 134 délivré par les moyens de traitement 133 du spectromètre optique 131.

Sur chaque courbe, on trouve en abscisses la longueur d'onde du spectre de fluorescence, et en ordonnées la valeur, en unités arbitraires, du flux lumineux de fluorescence à la longueur d'onde considérée.

Une façon de lire ces courbes est de repérer les différentes longueurs d'onde caractéristiques pour lesquelles la valeur du flux lumineux de fluorescence présente un maximum, local ou global. On parle alors de « pics » dans le signal de fluorescence émis par l'objet.

En fonction de la position des longueurs d'onde caractéristiques dans le spectre lumineux mesuré, il est possible, si des spectres de références sont connus, d'identifier quels constituants sont analysés dans la zone d'étude de l'objet.

La courbe de la figure 3 correspond ainsi au signal de fluorescence obtenu grâce au spectrofluorimètre 100 décrit précédemment en analysant trois objets différents à la surface desquels un pigment bleu avait été déposé mélangé à de la gomme arabique et en utilisant la première diode électroluminescente 111 émettant à 285 nm et le premier filtre optique 121 coupant à 320 nm.

La courbe de la figure 4 correspond au signal de fluorescence obtenu en analysant trois objets différents à la surface desquels un pigment jaune avait été déposé et en utilisant la deuxième diode électroluminescente 112 émettant à 375 nm et le deuxième filtre optique 122 coupant à 455 nm.

La courbe de la figure 5 correspond ainsi au signal de fluorescence obtenu en analysant trois objets différents à la surface desquels un pigment rouge avait été déposé mélangé à de la gomme arabique et en utilisant la deuxième diode électroluminescente 112 émettant à 375 nm et le deuxième filtre optique 122 coupant à 455 nm.

Sur la figure 4, on peut faire les observations suivantes :
- la courbe référencée B1 présente un premier pic à une longueur d'onde d'environ 460 nm caractéristique de la gomme arabique et un deuxième pic à une longueur d'onde d'environ 890 nm correspondant à un pigment bleu dit « bleu égyptien » ;
- la courbe référencée B2, qui correspond à de l'azurite, présente le même premier pic à 460 nm caractéristique de la gomme arabique mais aucun deuxième pic n'est observé ;
- la courbe référencée B3 présente également le pic dû à la gomme arabique et un autre pic très faible autour de 790 nm correspondant à un pigment bleu qui est de l'indigo.

Sur la figure 5 sont représentés les signaux de fluorescence de l'orpiment (courbe J1), du jaune de plomb et d'étain et de l'ocre jaune (courbe J3). Ici, seule la courbe J3 correspondant à l'ocre jaune se détache, avec un pic de fluorescence caractéristique situé autour de 590 nm. L'orpiment (courbe J1) et le jaune de plomb et d'étain présentent quant à eux un pic autour de 560 nm environ.

Sur la figure 6, on retrouve pour chacune des trois courbes R1, R2, R3 le pic caractéristique de la gomme arabique autour de 460 nm.

On trouve également :
- pour la courbe référencée R1 : un deuxième pic très important à une longueur d'onde d'environ 630 nm correspondant à un pigment rouge dit « bois de Brésil » ;
- pour la courbe référencée R2 : un deuxième pic à une longueur d'onde d'environ 590 nm correspondant à un pigment rouge qui est le minium ;
- pour la courbe référencée R3 : un deuxième pic à une longueur d'onde d'environ 640 nm correspondant à un pigment rouge du type cochenille.

On notera par ailleurs que sur chacune de ces courbes, le signal de fluorescence n'est pas parasité par le spectre lumineux d'émission des diodes électroluminescentes.

Ces différentes courbes ont été comparées à celles obtenues avec un spectrofluorimètre du commerce (FluoroLog 2 de la société Horiba Jobin Yvon) et des résultats comparables ont été obtenus.

Dans une troisième étape du procédé d'identification, le signal de fluorescence est traité donc par les moyens informatiques 140 qui identifient, dans une dernière étape, à partir de ce traitement, au moins un composé chimique C présent dans la zone d'étude 101B de l'objet 101 analysé.

Cette identification est ici réalisée pour les trois exemples précédemment décrits en comparant les spectres lumineux J1, J2, J3 ; B1, B2, B3 ; R1, R2, R3 du flux lumineux de fluorescence 2 avec au moins un autre spectre lumineux de référence du registre de base de données des moyens informatiques 140.

Ces spectres lumineux de référence sont notamment caractérisés par la présence de pics de fluorescence à différentes longueurs d'onde spécifiques à certains composés chimiques.

Comme décrit précédemment, la reconnaissance d'un pic dans le spectre lumineux pour une longueur d'onde donnée permet alors d'identifier dans la zone d'étude 101B la présence d'un composé chimique C dont le spectre lumineux de référence enregistré dans le registre de base de données comprend un tel pic autour de cette longueur d'onde.

De manière avantageuse, la base de données peut également être enrichie avec les spectres lumineux de fluorescence mesurés grâce au moyen du spectrofluorimètre de l'invention.

Il est également possible grâce au registre de base de données d'identifier des mélanges de différents composés chimiques présents dans la zone d'étude de l'objet analysé. Ceci est particulièrement adapté pour l'analyse d'un objet combinant différents supports, pigments, ou liants.

Le spectrofluorimètre de l'invention est portable, léger et présente un coût réduit. Il est de plus évolutif. Son architecture permet de s'approcher au plus près de l'objet à analyser. La tête de mesure de ce spectrofluorimètre peut être portée par un bras robotisé par exemple ou un support de table du genre portique, afin de survoler l'objet à distance constante et ajustée.

Le spectrofluorimètre de l'invention présente ainsi l'avantage d'éviter tout contact avec l'objet à mesurer.

La présente invention est définie par les revendications ci-jointes.

## Revendications

1. Spectrofluorimètre (100) pour l'analyse d'un objet (101) comportant :
- des moyens d'excitation lumineuse (111, 112, 113) adaptés à illuminer une zone d'étude (101B) dudit objet (101) avec un faisceau lumineux d'excitation (1),
- des moyens optiques d'acheminement (121, 122, 123, 124) adaptés à collecter un flux lumineux de fluorescence (2) émis par ladite zone d'étude (101B) excitée par le faisceau lumineux d'excitation (1) et à acheminer ledit flux lumineux de fluorescence (2) vers un spectromètre optique (131) du spectrofluorimètre (100) pour l'analyse du spectre lumineux (J1, J2, J3 ; B1, B2, B3 ; R1, R2, R3) dudit flux lumineux de fluorescence (2), dans lequel
- les moyens d'excitation lumineuse (111, 112, 113) comprennent une première diode électroluminescente (111) et une deuxième diode électroluminescente (112), la première diode électroluminescente (111) émettant à une première longueur d'onde (λ1) comprise entre 250 et 300 nm et ledit faisceau lumineux d'excitation (1 ) étant formé de l'un et/ou de l'autre faisceau lumineux généré par chaque diode électroluminescente (111, 112), **caractérisé en ce que**:
- ladite première diode électroluminescente (111) est du type à lentille intégrée,
- le spectrofluorimètre comporte un système de déplacement (102, 103, 104) des moyens d'excitation lumineuse (111, 112, 113) adaptés à ajuster la position de ladite zone d'étude (101B) sur l'objet(101) et/ou l'orientation dudit faisceau lumineux d'excitation (1) par rapport à l'objet (101),
- le spectrofluorimètre comporte un système de positionnement mécanique (102, 103, 104, 107) en translation et/ou en rotation des moyens optiques d'acheminement (121, 122, 123, 124) pour maximiser le flux lumineux de fluorescence (2) collecté,
- le système de déplacement et le système de positionnement mécanique sont intégrés dans une tête de mesure, et spectrofluorimètre (100) comprend moyens de commande pour piloter ladite tête de mesure,

2. Spectrofluorimètre (100) selon la revendication 1, dans lequel ladite deuxième diode électroluminescente (112) émet à une deuxième longueur d'onde (λ2) comprise entre 300 et 500 nm.

3. Spectrofluorimètre (100) selon l'une des revendications 1 et 2, dans lequel lesdits moyens d'excitation lumineuse (111, 112, 113) comprennent une première lentille de focalisation (113) pour focaliser ledit faisceau lumineux d'excitation (1) sur une surface (101A) dudit objet (101).

4. Spectrofluorimètre (100) selon l'une des revendications 1 à 3, dans lequel lesdits moyens optiques d'acheminement (121, 122, 123, 124) comprennent une deuxième lentille de focalisation (123) pour acheminer le flux lumineux de fluorescence (2) collecté vers une entrée (132) dudit spectromètre optique (131).

5. Spectrofluorimètre (100) selon l'une des revendications 1 à 4, dans lequel lesdits moyens optiques d'acheminement (121, 122, 123, 124) comprennent un premier filtre optique (121) et un deuxième filtre optique (122) destinés à éliminer respectivement des parties dudit flux lumineux de fluorescence (2) qui sont émises respectivement à la première longueur d'onde (λ1 ) et à la deuxième longueur d'onde (λ2).

6. Spectrofluorimètre (100) selon la revendication 5, dans lequel le premier (121) et le deuxième filtre optique (122) sont des filtres passe-haut présentant respectivement une première fréquence de coupure (fc1) égale à 320 nm et une deuxième fréquence de coupure (fc2) égale à 455 nm.

7. Spectrofluorimètre (100) selon l'une des revendications 1 à 6, dans lequel les moyens optiques d'acheminement (121, 122, 123, 124) comportent une fibre optique (124) pour acheminer ledit flux lumineux de fluorescence (2) collecté vers ledit spectromètre optique (131).

8. Spectrofluorimètre (100) selon l'une des revendications 1 à 7, dans lequel il est prévu des moyens de multiplexage temporel des faisceaux lumineux générés par chacune des deux diodes électroluminescentes et dans lequel ledit spectromètre optique (131) est adapté à traiter un flux lumineux de fluorescence (2) multiplexé.

9. Spectrofluorimètre (100) selon l'une des revendications 1 à 8, dans lequel ledit spectromètre optique (131) délivre un signal de fluorescence (134) représentatif du spectre lumineux (J1, J2, J3 ; B1, B2, B3 ; R1, R2, R3) dudit flux lumineux de fluorescence (2) et comportant des moyens informatiques (140) adaptés à traiter ledit signal de fluorescence (134) pour identifier au moins un composé chimique (C) présent dans ladite zone d'étude (101B) de l'objet (101) analysé.

10. Spectrofluorimètre (100) selon la revendication 9, dans lequel lesdits moyens informatiques (140) comportent un registre de base de données comprenant une pluralité de spectres lumineux de référence associés chacun à un composé chimique particulier, ladite identification d'au moins un composé chimique (C) par lesdits moyens informatiques (140) étant réalisée par comparaison du spectre lumineux (J1, J2, J3 ; B1, B2, B3 ; R1, R2, R3) dudit flux lumineux de fluorescence (2) avec au moins un autre spectre lumineux de référence.

11. Procédé d'identification d'un composé chimique (C) présent dans une zone d'étude (101B) d'un objet (101) à analyser au moyen d'un spectrofluorimètre (100) selon l'une des revendications 9 et 10, comportant des étapes consistant à :
a) illuminer ladite zone d'étude (101B) de l'objet (101) au moyen dudit flux lumineux d'excitation (1) ;
b) collecter et acheminer grâce auxdits moyens optiques d'acheminement (121, 122, 123, 124) ledit flux lumineux de fluorescence (2) émis par ladite zone d'étude (101B) excitée vers ledit spectromètre optique (131) pour l'analyse du spectre lumineux (J1, J2, J3 ; B1, B2, B3 ; R1, R2, R3) dudit flux lumineux de fluorescence (2) ;
c) traiter grâce auxdits moyens informatiques (140) ledit signal de fluorescence (134) représentatif du spectre lumineux (J1, J2, J3 ; B1, B2, B3 ; R1, R2, R3) dudit flux lumineux de fluorescence (2) ; et
d) identifier à partir du traitement de l'étape c) au moins un composé chimique (C) présent dans ladite zone d'étude (101B) de l'objet (101) analysé.

12. Procédé d'identification selon la revendication 11, en dépendance de la revendication 10, selon lequel, à l'étape d), l'identification dudit composé chimique (C) est réalisée en comparant ledit spectre lumineux (J1, J2, J3 ; B1, B2, B3 ; R1, R2, R3) dudit flux lumineux de fluorescence (2) avec au moins un autre spectre lumineux de référence dudit registre de base de données des moyens informatiques (140) du spectrofluorimètre (100).

## Patentansprüche

1. Spektrofluorometer (100) für die Analyse eines Gegenstands (101) mit:
- Mitteln (111, 112, 113) zum Erregen durch Licht, die dazu ausgelegt sind, ein Untersuchungsgebiet (101B) des Gegenstands (101) mit einem Erregungslichtstrahl (1) zu beleuchten,
- optischen Zuführungsmitteln (121, 122, 123, 124), die dazu ausgelegt sind, einen vom Untersuchungsgebiet (101B) ausgesandten, vom Erregungslichtstrahl (1) angeregten Fluoreszenzlichtstrom (2) zu sammeln und den Fluoreszenzlichtstrom (2) einem optischen Spektrometer (131) des Spektrofluorometers (100) für die Analyse des Lichtspektrums (J1, J2, J3; B1, B2, B3; R1, R2, R3) des Fluoreszenzlichtstroms (2) zuzuführen, wobei
- die Mittel (111, 112, 113) zum Erregen durch Licht eine erste Leuchtdiode (111) und eine zweite Leuchtdiode (112) aufweisen, wobei die erste Leuchtdiode (111) mit einer ersten Wellenlänge (λ1) zwischen 250 nm und 300 nm abstrahlt und der Erregungslichtstrahl (1) durch den einen oder den anderen von jeder Leuchtdiode (111, 112) erzeugten Lichtstrahl gebildet wird,
**dadurch gekennzeichnet, daß**
- die erste Leuchtdiode (111) vom Typ mit integrierter Linse ist,
- das Spektrofluorometer ein System (102, 103, 104) zum Verlagern der Mittel (111, 112, 113) zum Erregen durch Licht aufweist, das dazu ausgelegt ist, die Position des Untersuchungsgebiets (101B) auf dem Gegenstand (101) und/oder die Ausrichtung des Erregungslichtstrahls (1) gegenüber dem Gegenstand (101) zu justieren,
- das Spektrofluorometer ein System (102, 103, 104, 107) zum mechanischen Positionieren der optischen Zuführungsmittel (121, 122, 123, 124) durch Verschieben und/oder Drehen aufweist, um den gesammelten Fluoreszenzlichtstrom (2) zu maximieren,
- das System zum Verlagern und das System zum mechanischen Positionieren in einem Meßkopf integriert sind und das Spektrofluorometer (100) Steuerungsmittel zum Steuern des Meßkopf aufweist.

2. Spektrofluorometer (100) gemäß Anspruch 1, bei dem die zweite Leuchtdiode (112) bei einer zweiten Wellenlänge (λ2) zwischen 300 und 500 nm abstrahlt.

3. Spektrofluorometer (100) gemäß einem der Ansprüche 1 und 2, bei dem die Mittel (111, 112, 113) zum Erregen durch Licht eine erste Fokussierlinse (113) zum Fokussieren des Erregungslichtstrahls (1) auf eine Oberfläche (101A) des Gegenstands (101) aufweisen.

4. Spektrofluorometer (100) gemäß einem der Ansprüche 1 bis 3, bei dem die optischen Zuführungsmittel (121, 122, 123, 124) eine zweite Fokussierlinse (123) zum Zuführen des gesammelten Fluoreszenzlichtstroms (2) zu einem Eingang (132) des optischen Spektrometers (131) aufweisen.

5. Spektrofluorometer (100) gemäß einem der Ansprüche 1 bis 4, bei dem die optischen Zuführungsmittel (121, 122, 123, 124) ein erstes optisches Filter (121) und ein zweites optisches Filter (122) aufweisen, die dazu bestimmt sind, jeweils die Teile des Fluoreszenzlichtstroms (2) zu unterdrücken, die jeweils bei der ersten Wellenlänge (λ1) und bei der zweiten Wellenlänge (λ2) ausgesandt werden.

6. Spektrofluorometer (100) gemäß Anspruch 5, bei dem das erste (121) und das zweite (122) optische Filter Hochpaßfilter sind, die jeweils eine erste Grenzfrequenz (fc1) gleich 320 nm und eine zweite Grenzfrequenz (fc2) gleich 455 nm aufweisen.

7. Spektrofluorometer (100) gemäß einem der Ansprüche 1 bis 6, bei dem die optischen Zuführungsmittel (121, 122, 123, 124) eine optische Faser (124) zum Zuführen des gesammelten Fluoreszenzlichtstroms (2) zum optischen Spektrometer (131) aufweisen.

8. Spektrofluorometer (100) gemäß einem der Ansprüche 1 bis 7, bei dem Mittel zum zeitlichen Multiplexieren der durch jede der Leuchtdioden erzeugten Lichtstrahlen vorgesehen sind und bei dem das optische Spektrometer (131) dazu ausgelegt ist, einen multiplexierten Fluoreszenzlichtstrom (2) zu verarbeiten.

9. Spektrofluorometer (100) gemäß einem der Ansprüche 1 bis 8, bei dem das optische Spektrometer (131) ein für das Lichtspektrum (J1, J2, J3; B1, B2, B3; R1, R2, R3) des Fluoreszenzlichtstroms (2) repräsentatives Fluoreszenzsignal (134) liefert und das Informatikmittel (140) aufweist, die dazu ausgelegt sind, das Fluoreszenzsignal (134) zu verarbeiten, um wenigstens eine auf dem Untersuchungsgebiet (101B) des analysierten Gegenstands (101) vorhandene chemische Zusammensetzung (C) zu identifizieren.

10. Spektrofluorometer (100) gemäß Anspruch 9, bei dem die Informatikmittel (140) ein Datengrundregister aufweisen, das eine Anzahl Referenzlichtspektren enthält, die jeweils einer bestimmten chemischen Zusammensetzung entsprechen, wobei die Identifizierung wenigstens einer chemischen Zusammensetzung (C) durch die Informatikmittel (140) durch einen Vergleich des Lichtspektrums (J1, J2, J3; B1, B2, B3; R1, R2, R3) des Fluoreszenzlichtstroms (2) mit wenigstens einem anderen Referenzlichtspektrum erfolgt.

11. Verfahren zum Identifizieren einer in einem Untersuchungsgebiet (101B) eines zu analysierenden Gegenstands (101) vorhandenen chemischen Zusammensetzung (C) mittels eines Spektrofluorometers (100) gemäß einem der Ansprüche 9 und 1 0, mit Schritten, die darin bestehen,
a) das Untersuchungsgebiet (101B) des Gegenstands (101) mittels des Erregungslichtstrahls (1) zu beleuchten;
b) den von dem angeregten Untersuchungsgebiet (101B) ausgesandten Fluoreszenzlichtstrom (2) zu sammeln und mittels der optischen Zuführungsmittel (121, 122, 123, 124) dem optischen Spektrometer (131) für die Analyse des Lichtspektrums (J1, J2, J3; B1, B2, B3; R1, R2, R3) des Fluoreszenzlichtstroms (2) zuzuführen;
c) das für das Lichtspektrum (J1, J2, J3; B1, B2, B3; R1, R2, R3) des Fluoreszenzlichtstroms (2) repräsentative Fluoreszenzsignal (134) mittels der Informatikmittel 140) zu verarbeiten; und
d) von der Verarbeitung des Schritts c) ausgehend, wenigstens eine auf dem Untersuchungsgebiet (101B) des analysierten Gegenstands (101) vorhandene chemische Zusammensetzung (C) zu identifizieren.

12. Identifizierungsverfahren gemäß Anspruch 11 in Abhängigkeit von Anspruch 10, gemäß dem beim Schritt d) die Identifizierung der chemischen Zusammensetzung (C) durch Vergleich des Lichtspektrums (J1, J2, J3; B1, B2, B3; R1, R2, R3) des Fluoreszenzlichtstroms (2) mit wenigstens einem anderen Referenzlichtspektrum des Datengrundregisters der Informatikmittel (140) des Spektrofluorometers (100) erfolgt.

## Claims

1. A spectrofluorometer (100) for analysis of an object (101) including:
- light excitation means (111, 112, 113) adapted to illuminate a study zone (101B) of said object (101) with an excitation light beam (1),
- optical routing means (121, 122, 123, 124) adapted to collect a fluorescence light flux (2) emitted by said study zone (101B) excited by the excitation light beam (1) and to route said fluorescence light flux (2) towards an optical spectrometer (131) of the spectrofluorometer (100) for analysis of the light spectrum (J1, J2, J3; B1, B2, B3; R1, R2, R3) of said fluorescence light flux (2), wherein the light excitation means (111, 112, 113) comprise a first electroluminescent diode (111) and a second electroluminescent diode (112), the first electroluminescent diode (111) emitting at a first wavelength (λ1) comprised between 250 and 300 nm and said excitation light beam (1) being formed by one and/or the other light beam generated by each electroluminescent diode (111, 112), **characterized in that**:
said first electroluminescent diode (111) is of the integrated lens type,
the spectrofluorometer includes a system (102, 103, 104) for moving the light excitation means (111, 112, 113), adapted to adjust the position of said study zone (101B) on the object (101) and/or the orientation of said excitation light beam (1) with respect to the object (101),
the spectrofluorometer includes a mechanical system (102, 103, 104, 107) for the translational and/or rotational positioning of the optical routing means (121, 122, 123, 124), to maximize the fluorescence light flux (2) collected,
the moving system and the mechanical positioning system are integrated into a measuring head, and the spectrofluorometer includes control means for driving said measuring head.

2. The spectrofluorometer (100) according to claim 1, wherein said second electroluminescent diode (112) emits at a second wavelength (λ2) comprised between 300 and 500 nm.

3. The spectrofluorometer (100) according to one of claims 1 and 2, wherein said light excitation means (111, 112, 113) comprise a first focusing lens (113) to focus said excitation light beam (1) to a surface (101A) of said object (101).

4. The spectrofluorometer (100) according to one of claims 1 to 3, wherein said optical routing means (121, 122, 123, 124) comprise a second focusing lens (123) to route the fluorescence light flux (2) collected towards an entry (132) of said optical spectrometer (131).

5. The spectrofluorometer (100) according to one of claims 1 to 4, wherein said optical routing means (121, 122, 123, 124) comprise a first optical filter (121) and a second optical filter (122) intended to eliminate, respectively, portions of said fluorescence light flux (2) that are emitted at the first wavelength (λ1) and at the second wavelength (λ2), respectively.

6. The spectrofluorometer (100) according to claim 5, wherein the first (121) and the second (122) optical filter are high-pass filters having, respectively, a first cut-off frequency (fc1) equal to 320 nm and a second cut-off frequency (fc2) equal to 455 nm.

7. The spectrofluorometer (100) according to one of claims 1 to 6, wherein the optical routing means (121, 122, 123, 124) include an optical fibre (124) to route said fluorescence light flux (2) collected towards said optical spectrometer (131).

8. The spectrofluorometer (100) according to one of claims 1 to 7, wherein means for time multiplexing the light beams generated by each of the two electroluminescent diodes are provided, and wherein said optical spectrometer (131) is adapted to process a multiplexed fluorescence light flux (2).

9. The spectrofluorometer (100) according to one of claims 1 to 8, wherein said optical spectrometer (131) delivers a fluorescence signal (134) representative of the light spectrum (J1, J2, J3; B1, B2, B3; R1, R2, R3) of said fluorescence light flux (2) and including computer means (140) adapted to process said fluorescence signal (134) to identify at least one chemical compound (C) present in said study zone (101B) of the analysed object (101).

10. The spectrofluorometer (100) according to claim 9, wherein said computer means (140) include a database register comprising a plurality of reference light spectra each associated with a particular chemical compound, said identification of at least one chemical compound (C) by said computer means (140) being made by comparison of the light spectrum (J1, J2, J3; B1, B2, B3; R1, R2, R3) of said fluorescence light flux (2) with at least one other reference light spectrum.

11. A method of identification of a chemical compound (C) present in a study zone (101B) of an object (101) to be analysed by means of a spectrofluorometer (100) according to one of claims 9 and 10, including steps of:
a) illuminating said study zone (101B) of the object (101) by means of said excitation light flux (1);
b) collecting and routing, thanks to said optical routing means (121, 122, 123, 124), said fluorescence light flux (2) emitted by said excited study zone (101B) towards said optical spectrometer (131) for the analysis of the light spectrum (J1, J2, J3; B1, B2, B3; R1, R2, R3) of said flux (2);
c) processing, thanks to said computer means (140), said fluorescence signal (134) representative of the light spectrum (J1, J2, J3; B1, B2, B3; R1, R2, R3) of said fluorescence light flux (2); and
d) identifying, based on the processing of step c), at least one chemical compound (C) present in said study zone (101B) of the object (101) analysed.

12. The method of identification according to claim 11, depending on claim 10, wherein, at step d), the identification of said chemical compound (C) is made by comparing said light spectrum (J1, J2, J3; B1, B2, B3; R1, R2, R3) of said fluorescence light flux (2) with at least one other reference light spectrum of said database register of the computer means (140) of the spectrofluorometer (100) .
